# EUROPEAN PATENT APPLICATION

(11) **EP 2 060 618 A1**
(43) Date of publication of application: **20.05.2009**
(21) Application number: 07120931.6
(22) Date of filing: 16.11.2007
(51) Int. Cl.: C10L 11/06, C10L 5/40, C10L 5/44, C10L 5/36

(54) **Combustible materials**

(71) Applicant: Malone, Shamus, Jenkinstown Kilkenny (IE)
(72) Inventor: Malone, Shamus, Jenkinstown Kilkenny (IE)
(74) Representative: Lane, Cathal Michael

(57) **Abstract**

A combustible fire block for providing sustained heat output having a combustible fire block body formed from combustible material pressed into a mass and having a base, an intermediate portion and a top; at least one fire propagation pathway formed within the body, said fire propagation pathway running between an opening in the base and an opening in the top and being defined by internal walls of the body the pathway being dimensioned so as to allow the block to bum by propagation of fire along the internal walls defining the pathway. The fire block will form an entire fire. A firelighter comprising a body of fire ignition material in the form of a webbed profile onto which a fuel to be ignited for combustion can be placed is also provided.

## Description

### Field of the Invention

The present invention relates to combustible materials for example fire blocks and firelighters.

### Background to the Invention

Man has been using combustible materials since the beginning of time in order to provide heat, light, and for cooking etc. there have been many attempts to improve fire lighting materials which have traditionally been employed to start a fire where the main combustible material is a separate fuel. For example artificial firelighters have been manufactured to light solid fuels such as wood, coal, turf etc. solid fuels have been harvested, for example by chopping up trees, or mining. Furthermore, combustible materials in solid format have been manufactured by compressing/adhering particulate or fibrous matter. One example is a fire log formed by compressed sawdust mixed with petroleum wax or other combustible binder. The wax of these types of logs are easily lit but the logs have little burning efficiency and produce little in heat. More modem techniques take sawdust with low moisture content and heat it using compression. In the process the natural lignin in the wood bonds the particles together to form the log and there is therefore no requirement for binding agents such as resins. This log bums efficiently and is capable of producing a very high heat output. However, the log has a disadvantage in that it is very difficult to light. Accordingly it is often a requirement that a strong fire be already lit before the log is introduced.

Traditionally such fires have been built in an open space, within a hearth with a chimney, or upon an open grate (with no chimney) such as for camp fires, barbecues etc. It has traditionally proven difficult to light certain materials and often firelighting fuels are provided. These are flammable liquids which are applied to the solid fuel to be ignited to accelerate the initial ignition. Firelighters have traditionally functioned as intermediary combustible material, proving easier to light than the solid fuel and burning for longer than an ignition source such as a match. The firelighter bums for longer allowing the solid fuel to catch fire over a longer period.

Not withstanding the various methods which have been employed to start fires, there have been difficulties in lighting fires. For example even with a firelighter and/or ignition fuels, it can still prove difficult to light a fire.

Many different proposals have been put forward in respect of lighting fires. For example, European Patent publication number 0 069 024 describes a combustion unit of solid material forming a homogenous cylindrical block such as a log of wood. A plurality of recesses are connected by a slot running through the log. The main purpose of the construction is to allow flames to be seen at the top of the log while the log is burning for an aesthetic effect. US 2006/0162244 describes a two-piece charcoal block which is lit by placing loose kindling within a cavity. International (PCT) publication number WO 02/22764 describes an artificial fire log with a groove extending along its bottom surface.

International (PCT) publication number WO 00/53700 describes a firelighter for a solid fuel fire. The firelighter has a body formed of combustible material. It has a central cavity enclosed by the body. A lighting means is held within and is surrounded by the walls of the cavity. Ventilation apertures are also provided from the sides of the firelighter to the cavity. The firelighter is used for lighting other solid fuels. Many embodiments are shown in the drawings of this document, all of which show multiple apertures from a sidewall of the firelighter with all apertures extending into the cavity. Swiss Patent application CH 695496 describes a firelighter in the form of a grooved block. US Patent No. 6379405 describes a fire starter having a ring-shaped mass of combustible wood and wax.

It is desirable to provide alternative fire blocks and firelighters to those that have been previously proposed.

### Summary of the Invention

In a first aspect the present invention provides a combustible fire block. In a first arrangement the fire block is for providing sustained heat output comprising:
a combustible fire block body formed from combustible material pressed into a mass and having a base, an intermediate portion and a top;
at least one fire propagation pathway formed within the body, said fire propagation pathway running between an opening in the base and an opening in the top and being defined by internal walls of the body the pathway being dimensioned so as to allow the block to bum by unimpeded propagation of fire along the internal walls defining the pathway.

The prior art fire logs have not allowed unimpeded propagation of fire. In particular they have not allowed sufficient air to allow the block to bum in an unimpeded fashion along all the internal walls of the pathway. Air supply has been impeded restricting fire propagation.

In one embodiment the fire block of the invention comprises a combustible fire block body formed from combustible material pressed into a mass and having a base, an intermediate portion and a top;
at least one fire propagation pathway formed within the body and with a closed perimeter defined by internal surfaces of the body, and at least one fire propagation pathway defined by internal surfaces of the body which has a perimeter which is open on one side thereof, each of said propagation pathways running along respective vertical axes from respective openings in the base to respective openings in the top and each being defined by internal vertical walls of the body and each being dimensioned so as to allow the block to bum by propagation of fire along the walls defining the pathway, the closed perimeter being closed along (the direction of) the vertical axis and the open perimeter being open on one side along the (the direction of) vertical axis.

In such an arrangement the fire propagation pathways run from the base to the top so that air is taken in from underneath the fire block and exhausted through the top. There is sufficient airflow within the propagation pathways so that burning along the internal walls of the pathway can advance substantially unimpeded.

In a further arrangement the present invention provides a combustible fire block for providing sustained heat output comprising:
a combustible fire block body formed from combustible material pressed into a mass and having a base, an intermediate portion and a top;
at least two fire propagation pathways formed within the body, said fire propagation pathways each running between an opening in the base and an opening in the top and each being defined by internal walls of the body the pathways being dimensioned so as to allow the block to bum by propagation of fire along the internal walls defining each pathway,
the body incorporating an ignition material proximate the openings and held on the base thereof, the ignition material being arranged so as to ignite the fire block along the pathways through the openings on the base.

Again in such an arrangement the fire propagation pathways run from the base to the top so that air is taken in from underneath the fire block and exhausted through the top so that there is sufficient airflow within the propagation pathways so that burning along the internal walls of the pathway can advance substantially unimpeded. Furthermore the ignition material often referred to as firelighter material propagates ignition of the (underside of the) fire block body.

In a yet further advantageous arrangement the present invention provides a one-piece combustible fire block for providing sustained heat output comprising:
a combustible fire block body formed from combustible material pressed into a mass and having a base, an intermediate portion and a top;
at least one fire propagation pathway defined by internal surfaces of the body which has a perimeter which is open on one side thereof, said propagation pathways running along a vertical axis from an opening in the base to an opening in the top and being defined by internal vertical walls of the body the pathway being dimensioned so as to allow the block to bum by propagation of fire along the walls defining the pathway, the open perimeter being open on one side along the axis,
the body incorporating a raised portion in the base thereof, the raised portion having the opening in the base defined therein.

Having a raised portion contributes to better ventilation through the propagation pathways.

The present invention also provides a combustible fire block for providing sustained heat output comprising:
a combustible fire block body formed from combustible material pressed into a mass and having a base, an intermediate portion and a top;
at least one fire propagation pathway formed within the body, said fire propagation pathway running vertically between an opening in the base and an opening in the top and being defined by internal walls of the body the pathway being dimensioned so as to allow the block to bum by propagation of fire along the internal walls defining the pathway,
said at least one fire propagation pathway having a reduced cross-sectional area from the base to the top so that the opening in the base has a greater cross-sectional area than the opening in the top.

A fire block having such a construction can create a draw on the air being circulated through the propagation pathways. The narrowing (for example by providing one or more shoulders) of the pathway is done to promote circulation of air (for example in a manner similar to chimney design). Again the movement of air through the pathways allows substantially unimpeded burning.

It will be appreciated that any combination of the advantageous features described herein confer particular advantages on the fire block of the present invention.

The fire block of the invention is particularly useful for substitution for solid fuel fires such as wood, coal, turf, peat, briquettes fires etc. The normal orientation of the fire block of the invention will be as describe above with the base intermediate and top portions in a substantially vertical orientation. In general, the fire block of the invention will be dimensioned to replace such solid fuel and thus remove the requirement for additional solid fuel. In short a fire block of the invention forms an entire fire and can be constructed to bum for at least 20, or at least 30 minutes, suitably at least 40 minutes, for example at least 50 minutes such as at least 60 minutes. The sustained heat output of a fire block of the present invention will be comparable to that of a solid fuel fire. Accordingly, there will be no requirement to add additional (solid) fuel to the fire block of the invention to achieve a sustained heat output. All that will be required is for a person to purchase a fire block according to the present invention, place it on a suitable surface, for example a fire resistant surface such as a fire grate, and to ignite the fire block. There is no requirement to build a fire from individual solid fuel pieces. The present invention can provide an all-in-one sustainable fire with sufficient fuel mass to sustain a fire for a comparable period to solid fuel, and include a firelighter - all within a unitary mass.

The present invention can be considered to provide a (unitary) synthetic combustible fire block of sufficient mass to provide a sustained heat output (for example suitable for replacing a (non-unitary) solid fossil fuel) comprising:
a combustible fire block body formed from a solid mass of combustible material, the body having defined therein at least two channels which are provided for more even burning of the block (relative to the same block having no channels).

The channels give the block (increased and) sufficient surface area to allow fire to propagate along the channels. The channels form the fire propagation pathways. The block may be adapted for ignition at its base. Accordingly, it is desirable that the channels will run from the base through the intermediate portion to the top portion of the fire block. The channels will be sufficiently continuous to allow substantially unimpeded propagation of the fire. The channels are also dimensioned to allow sufficient circulation of and thus substantially unimpeded propagation of the fire. Generally circulation of air will take place by ingress of air at the base of the block and then along the block body to the top thereof. One or more channels can take the form of rebates in the body. Alternatively or additionally one or more channels can be wholly internal to the body.

The effect of the fire block of the present invention is essentially to provide discrete areas of the fire block (which can combust independently and simultaneously) each with independent ventilation.

The channels/pathway(s) of the present invention thus act as a vent also. In this convective arrangement air will be drawn in through the opening in the base along the surfaces defining the pathway. The pathways of the invention also acts as a flue allowing the by-products of combustion to be exhausted (through the opening in the top). This means that the combination of having the pathway(s) defined by combustible material and sufficient venting, there is sufficient air intake to allow the fire to propagate from the base of the fire block upwardly. The pathway can be considered a combustible (self-consuming) chimney defined within the block body. The pathways allows substantially unimpaired combustion of the fire block along the pathway. This means that internal parts of the fire block body can combust as if they are external to the body.

Indeed the fire block will not only combust by propagation of fire from the exterior of the block inwardly but also by propagation from within the pathway(s) towards the exterior of the block. Allowing the fire to propagate along the pathway is an important aspect of the present invention as this allows combustion to take place at a point internal to the external perimeter of the fire block. Accordingly, combustion of the fire block does not just occur on the external surfaces such as the base and sidewalls of the fire block, but also occurs within the body of the fire block itself. This means that it is much easier for the fire block to bum and indeed it bums more efficiently and evenly, for example by reaching a higher combustion temperature more quickly. Accordingly, the heat output of the fire block is greatly increased. This allows the fire block to reach sufficient heat output more quickly and in a time comparable to a fire built up piece-wise utilising pieces of conventional solid fuel.

The combustible surface area on the fire block is substantially increased by the fire propagation pathway(s). Generally the fire propagation pathways of the invention will increase the surface area of the fire block by at least 130% as compared to the equivalent fire block without the pathway(s). In general the pathways of the present invention will allow the combustible surface area of the fire block to be increased by 140%, 150%, 160%, 170%, 180%, 190%, 200% or greater. This additional combustible surface area is present in the fire block before it is lighted.

Desirably the fire block is constructed of material which bums as a smokeless fuel.

In one arrangement at least one fire propagation pathway has a closed perimeter defined by internal surfaces of the body. In this arrangement the fire propagation pathway acts like a self-consuming chimney within the fire block body.

It will be appreciated that the fire block of the present invention allows materials which would not conventionally be combustible (when in such a compact form) to be combusted in an environmentally friendly and convenient form. The efficient burning reduces release of uncombusted particles into the air. The materials employed in formation of a fire log of the present invention may be by-products from other processes such as cutting, harvesting etc. The person skilled in the art will be able to choose the materials which are to be formed in a fire block of the present invention based on its intended application. In general however the fire blocks of the present invention are capable of rapidly producing heat and burning with consistency. Typically the heat output will match and possibly exceed fossil solid fuel output. The fire block of the invention is simple to manufacture and manufacture can be carried out efficiently. Some exemplary materials include wood by-products such as sawdust etc, nutshells, cardboard, coffee grinds etc. Indeed the construction of fire blocks of the invention allowed for atypical materials, such as those which are traditionally considered hard to combust when present in a unitary mass, to be burned and such materials may be employed. It is envisaged that the fire block (and indeed the firelighter of the invention - see below) will be produced using dried materials, for example materials having a moisture content of around 4 -10%. Such materials are optionally press-moulded. A suitable compression rate may be between 10,000psi (68.4 MPa) - 15,000psi (103.2 MPa), depending on the materials used. Under these conditions binder may not be necessary for most biomass materials. If binder is required, then a natural binder such as lignin (for example in the form of lignosulphonates) may be introduced to the process.

Materials that might be used as igniters include ethanol-based materials such as gels or pastes, an impregnation of material such as paraffin wax, kerosene and combinations thereof. In a further embodiment of the invention, the fire block body can be impregnated with an oil desirably a plant-derived oil e.g. coconut oil, sunflower oil. In addition to improving burning performance, it is envisaged that the oil would limit the amount of moisture absorption (by the fire block) after production.

The fire block of the present invention will bum on an open hearth or within a stove. As stated above there is no requirement to start a fire and then build up the fire slowly by adding more fuel. Instead, the entire fuel for the fire is in place from the outset and the materials are easy to light.

Where two or more fire propagation pathways are provided, it is desirable that they do not interfere with the air circulation (convection) arrangements of each other. Each pathway should (independently) be able to draw sufficient air (from the base of the body, through the intermediate portion to the top thereof,) to allow fire to propagate along its surfaces. Accordingly, the pathways will generally be non-interconnected.

The propagation pathway may have a perimeter which is open on one side thereof. This may be for example where the body is provided with one or more rebates in the sidewalls thereof to provide said that way. It may be desirable to provide both open and closed pathways in a given fire block. This may be achieved by providing at least one fire propagation pathway with a closed perimeter defined by internal surfaces of the body and at least one propagation pathway that has a perimeter which is open on one side thereof.

In an embodiment where open channels only are provided, it will generally be desirable to provide a plurality of rebates in the sidewalls of the block. For example, at least two, for example at least three more particularly at least four propagation pathways may be provided each in the form of a rebate.

In an embodiment where closed channels are provided it will generally be desirable to provide a plurality of channels running through the block from the base thereof to the top thereof. For example, at least two, for example at least three more particularly at least four propagation pathways may be provided each in the form of a closed channel.

As above, for most efficient burning, it may be desirable to provide a combination of closed and open channels. For example at least two, at least three, or at least four channels are provided each independently selected from one of closed and open channels.

In all embodiments, it is desirable that the channels are arranged (spaced apart) to allow substantially even burning of the fire block body.

It is desirable that a fire block according to the present invention has a base that comprises a raised portion about the opening in the base. This means that for example where the fire block is placed on a surface for burning, air is not occluded from the base of the fire block (by the base contacting the surface on which it is placed about its entire perimeter) and in particular the underneath side thereof. Where more than one channel or pathway is provided, it is desirable that each opens out onto the base. Accordingly, it is desirable that the base of the fire block is raised about each opening so that there is sufficient air circulation for efficient burning. Raised in this context means raised in relation to the surface on which the fire block will sit. The raised arrangement may be achieved by providing a concavity in the underneath side of the block, or by raising the block body on one or legs or combinations of same. It will be appreciated that the concavity/legs may be of any desired shape. For example the concavity may be formed by one or more rebates in the block. Again it is desirable that the block is constructed as a single unit. In such an arrangement the raised portion and any leg or foot on which the block stands is integrally formed with the body.

The fire block of the present invention is desirably manufactured by moulding. It may also be manufactured by an extrusion process. A skilled person will be in a position to prepare a fire block of the invention based on the materials being used to manufacture the fire block. It is desirable that the fire block is manufactured with any fire propagation pathway already formed. However, it will be appreciated that a block of the invention could be manufactured to a given shape with the propagation pathways subsequently being cut into the block for example by routering.

It is desirable that a fire block of the present invention further comprises a fire-ignition material. The fire ignition material will be a material that can easily be light, for example utilising a spark, a glowing element, or a small flame, such as that from a match, cigarette lighter or the like.

It is desirable that the fire-ignition material is substantially evenly distributed across the base of the fire block body. This allows for even ignition across the base of the fire block from which point the fire can propagate.

In one arrangement at least one fire propagation pathway has a reduced cross-sectional area from the base to the top. This may be achieved by tapering and/or by stepping down the cross-sectional area. Such an arrangement allows for better convection increasing the draw of air into the channel/pathway.

The fire block of the invention may be of any given shape, including circular, rectangular, triangular and more complex shapes. Suitably at least one fire propagation pathway is elongate across the fire block body. Generally, it is desirable that the pathways/channels that have an open side which opens onto an exterior side of the fire block body, are elongate and optionally are deeper (extends further in a direction towards the centre of the fire block body) than it is wide.

Where one or more pathways are provided it is desirable that at least one fire propagation pathway is arranged with a transverse axis substantially parallel to a transverse axis of the body. This may allow for more of the flames to be seen by an observer and thus provides a more pleasing aesthetic affect.

In an advantageous arrangement comprising two or more fire blocks the top of the first fire block and a base of a second are arranged for mating engagement so that one fire block mates with another for stacking. In such mating there is positive engagement between the fire blocks to hold them in their relative positions (one atop the other). It will be appreciated that each fire block can be arranged for mating engagement with at least two other fire blocks. In this respect the top of one fire block will nest in the base of another.

In one embodiment the fire block body further comprises at least two legs to hold the base in a raised position. In such an arrangement the top of a fire block body is rebated to accommodate said legs so that one fire block can be mounted on another. The blocks interengage by protrusion of the leg(s) into the recess(es) so that they are stackable. Desirably rebates are provided at at last two edges of the fire block.

It will be appreciated that the mating arrangements and/or arrangements for raising the base of the block off a surface etc. may all be integrally formed with the fire block of the invention.

The invention extends to a fire block as described herein with reference to and as illustrated in the accompanying drawings.

A further aspect of the invention relates to a firelighter. In particular, the present invention provides a firelighter comprising a body of fire ignition material in the form of a webbed profile onto which a fuel to be ignited for combustion can be placed. The webbed profile provides sufficient apertures to allow the solid fuel placed on the profile to receive sufficient air to bum in a substantially unimpeded fashion. The firelighter of the invention does not in any way impede the burning of the solid fuel.

The firelighter design of the present invention is very successful. It allows for an easily lit fire, without any special placing of the solid fuel upon the firelighter. Importantly, it also allows a consistent performance every time as the fire will propagate, and maximum heat output will be achieved more rapidly. It is believed that a firelighter of the present invention would outperform conventional firelighter arrangements such as those described above with reference to the prior art. One of the main benefits of the firelighter of the present invention is that it provides consistent and appropriate ventilation for burning of a solid fuel placed on its surface. With the conventional firelighter arrangements, there is no built-in ventilation for in the solid feel. Instead, gaps for ventilation are provided by carefully building the fire using different pieces of the solid fuel to be burned. The design of the present invention allowed for unimpeded, and proved and continuous draught flow to the fire even when the fire became well established.

Desirably, the profile is no greater than 15 cm in thickness, for example no greater than 14 cm in thickness, for example such as no greater than 12 cm in thickness, suitably no greater than 10 cm in thickness.

It will be appreciated that in a reticulated arrangement such as a web the interlinking elements forming the web will be constructed of fire ignition material. The web may take the form of a grid arrangement with the interlinking elements forming bars of a grid. The grid can comprise two series of interlinking elements running in a substantially perpendicular direction. In such an arrangement the each series of elements may run rectilinearly. Apertures in the form of open cells are formed by the intersecting members

It will be appreciated that the present invention can be considered to provide a combustible fire grating formed of fire ignition material. The grating is for supporting solid fuel which forms a fire. The grating itself is lit with a flame (such as from a match, cigarette lighter or the like) and propagates fire across the entire web providing sufficient intensity of burning to light the solid fuel. The firelighter of the invention can be considered a combustible fire support (for combustible solid fuels). It is at the same time a firelighter and a fire support.

Suitable materials for forming a firelighter of the invention include combustible waste or recycled materials such as dried sawdust, peat dust, papier-mâché, wood chip, corn stoven, nut shells, treated, dried sewage and combinations thereof. In a further embodiment of the invention, the firelighter body can be impregnated with an oil e.g. coconut oil, sunflower oil. In addition to improving burning performance, it is envisaged that the oil would limit the amount of moisture absorption (by the firelighter) after production.

Desirably the profile has a top, a bottom, and sides, and an intermediate portion between the sides, the intermediate portion of the profile being raised with respect to at least one side portion. In this respect it will be appreciated that the profile is raised, that is the profile turns upwardly. The term "raised" when used in relation to the profile in this context does not include a construction where one part of the profile is simply higher than another solely due to height differences on the upper surface. In particular "raised" refers to all of the relevant part of the profile, including the bottom thereof, being raised with respect other parts thereof. It will be appreciated that the raised portion also has a web structure so that ventilation in the raised portion is available.

This simple construction has a very major advantage. In particular, it has been found by the present inventor, that in the case of solid fuels which are burned on such a firelighter with a raised portion, the fuel may maintain the raised shape even when the firelighter is completely burned away. This may occur due to fusing of the burning fuel. It will be appreciated that having a raised portion underneath the fuel to be burned, allows for better ventilation and thus more efficient burning.

It will be appreciated that the intermediate portion may have two or more distinct raised portions.

The profile may include at least one inclined portion. For example a straight or curved sloped surface may be provided. It will still be possible to place solid fuel easily on the firelighter of the invention even if it has a raised surface. The web arrangement will provide grip to hold fuel on the firelighter.

Generally it is desirable that the raised portions are supported by at least two side portions of the profile. The side portions will generally be arranged to stand on the supporting surface where the fire is to be lifted. This may be for example in a hearth, optionally upon a grate. It will be appreciated and the given side, or any portion of any given side of the profile may be raised also. This may be achieved without prejudicing the ability of the firelighter to support fuel to be burned. In one arrangement, the sides of the profile are substantially rectangular in shape, and at least one of the sides is raised, desirably forming part of the raised portion of the profile. Optionally, two opposing sides of the profile may be raised, each desirably forming part of the raised portion of the profile.

A firelighter according to the invention may include at least two (differently directed, differently shaped, or differently inclined) inclined portions. For example two or more inclined portions may meet for example in an apex. The apex may be of an angular shape or curved shape. The raised portions may run from one side of the firelighter to an opposing side thereof. Such a construction allows for a large proportion of the profile to be raised. This will achieve even greater ventilation and better burning.

In one arrangement of a firelighter of the present invention, a hip portion (a further inclined portion) may be formed by the junction of an inclined side portion and an inclined end portion. This hip portion is similar to the concept of a hip of a roof. The hip portion is desirably used in conjunction with at least two the inclined portions as set out above.

It will be appreciated that the inclined portions can have any desired shape. The inclination of the inclined portion(s) may be gradual or stepped or combinations thereof. Desirably at least one inclined portion has a curved shape. The inclined portion having the curved shape may be one or more inclined end portions (hip portions).

The curved shape may be a concave shape. A concave shape may allow for better retention of solid fuel on the firelighter. In one embodiment, the inclined end portion has a curved shape for example a concave shape.

Desirably firelighters according to the invention may be arranged to matingly engage one with another for stacking thereof. For example the top of a first firelighter may nest in the base of another.

It is desirable that the firelighter of the invention provides a suitable area for support of sufficient fuel to form a fire. In this respect it is desirable that a firelighter of the invention which has (length x width) dimensions of at least 130 mm x 130 mm such as at least 140mm x 140 mm, for example 150 mm x 150 mm, desirably at least 160 mm x 160 mm (or at least an equivalent amount of surface area). It will be appreciated that the firelighter of the invention can also take and desired shape.

Desirably at least 40%, such as at least 50%, for example at least 60% of the surface area of the web is not taken up by the material forming the web. This allows for very high levels of ventilation.

The invention extends to a firelighter of the invention substantially as described herein with reference to and as illustrated in the accompanying drawings.

### Brief Description of the Drawings

Figure 1 is a perspective view (from a position to the front and right side) of one embodiment of a fire block of the present invention.
Figure 2 is a perspective view (from a position to the rear and right side) of the fire block of Figure 1.
Figure 3 is a perspective view (from a position to the front and right side and below) of the fire block of Figure 1.
Figure 4 is an underneath plan view of the fire block of Figure 1 with ignition material shown by hatched lines.
Figure 5 is a top plan view of the fire block of Figure 1.
Figure 6 is a side cross-sectional view of the fire block of Figure 1 taken along the line A-A1 of Figure 5.
Figure 7 is a rear view of the fire block of Figure 1.
Figure 8 is a front view of the fire block of Figure 1.
Figure 9 is a side view of the fire block of Figure 1.
Figure 10 is a side view of a series of three fire blocks of the present invention is a nested/stacked arrangement.
Figure 11 is a perspective view (from above and to one side) of a firelighter of the invention.
Figure 12 is a perspective view (from above and to an opposite side) of the firelighter of Figure 11.
Figure 13 is a to plan view of the firelighter of Figure 11.
Figure 14 is a side elevational view of the firelighter of Figure 11.
Figure 15 is a front elevational view of the firelighter of Figure 11.
Figure 16 is a rear elevational view of the firelighter of Figure 11.
Figure 17 is a front elevational view of 3 firelighters of the type shown in Figure 11 in a stacked arrangement.
Figure 18 is a rear elevational view of 3 firelighters of the type shown in Figure 11 in a stacked arrangement.
Figure 19 is a perspective view (from above and to one side) of an alternative firelighter of the invention.
Figure 20 is a perspective view (from above and to an opposite side) of the firelighter of Figure 19.
Figure 21 is a perspective view (from underneath and one side) of the firelighter of Figure 19.
Figure 22 is a perspective view (from above and to one side) of a further firelighter of the invention.
Figure 23 is a perspective view (from above and to one side) of 3 firelighters of the type shown in Figure 22 in a stacked arrangement.

### Detailed Description of the Drawings

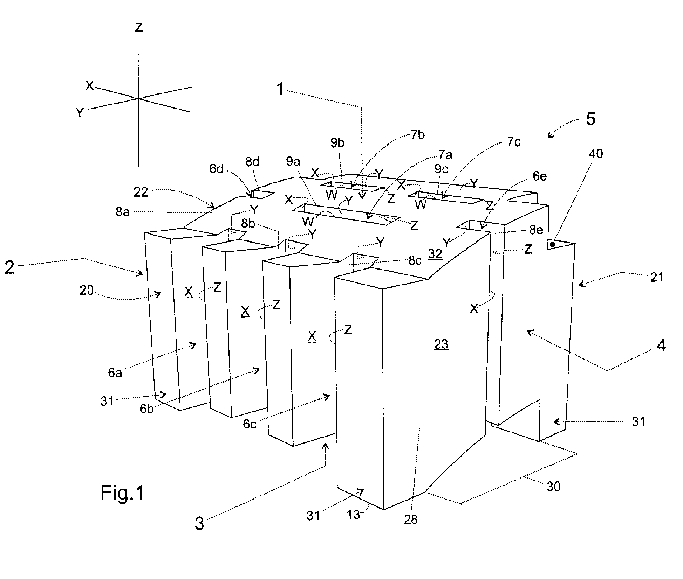

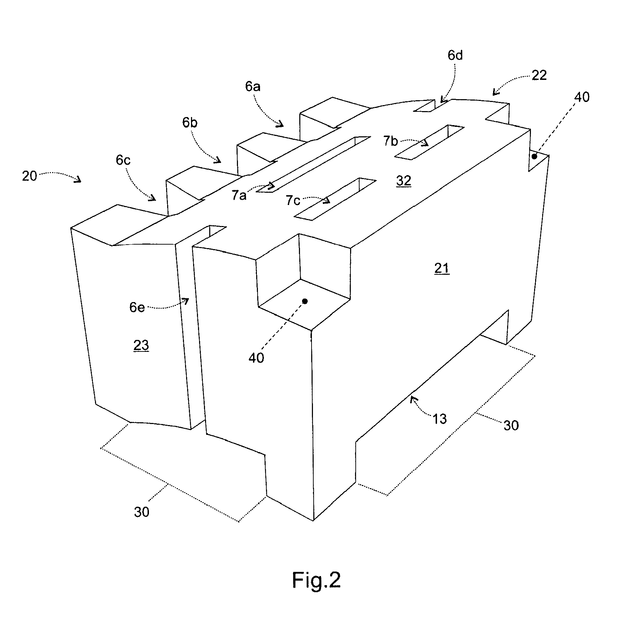

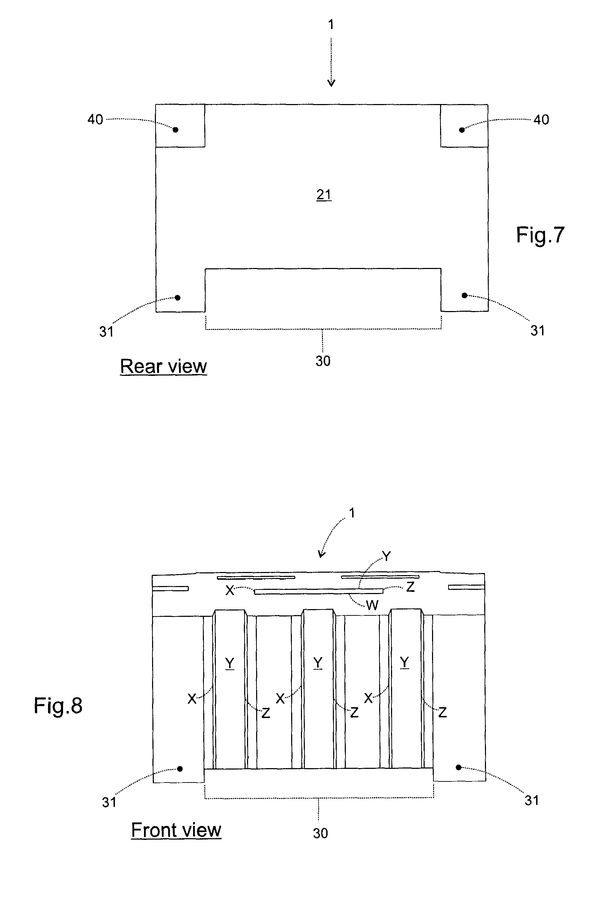

Figures 1-8 show an embodiment of a fire block of the present invention. In particular Figure 1 shows a perspective view of a combustible fire block 1 for providing sustained heat output. The block 1 is capable of supplying heat output equivalent to a fire made from loose solid materials such as fossil fuels, wood etc. The combustible fire block 1 is dimensioned so as to occupy the dimensions of the desired fire. The fire block 1 is constructed of loose combustible material that has been pressed together to form a unitary mass. There is no need for additional fuel elements such as wood or coal. The fire block by itself provides all that is required for a sustained fire.

The fire block 1 has a body 2 with a base 3, an intermediate portion 4, and a top portion 5. As can be seen in the Figures this is the vertical arrangement within the fire block when the fire block is in its normal burning orientation.

As can be clearly seen from the Figures a series of (open and unobstructed) fire propagation pathways or channels are formed within the body 2. There are essentially two types of channels formed within the body 2. A first type of channel is of a type which has a perimeter which is open on one side (and closed on the other sides). These channels have been identified by the reference numerals 6a-6e and are formed as rebates within the body with the open side of (the perimeter of) each channel running along the side of the body 2 from the base 3 through the intermediate portion 3 to the top portion 5. A second type of channel is of a type which has a perimeter which is closed on all sides thereof. These channels are closed channels formed internally within the block body 2 (they do not open out onto a side of the block body). These channels have been identified by reference numerals 7a-c. The first type of channel will hereinafter be referred to as an "external" channel. The second type of channel will hereinafter be referred to as an "internal" channel. All of the channels are continuous. All of the channels open onto the top 5 and base 3 of the body 2. More particularly each channel terminates at respective ends in an opening in the top 5 and the base 3. The top opening for external channels 6 a-c have been respectively labelled 8a-c. The top opening for channels 6d-e have been labelled 8d-e. Similarly, the top openings for internal channels 7a-c have been respectively labelled 9a-c.

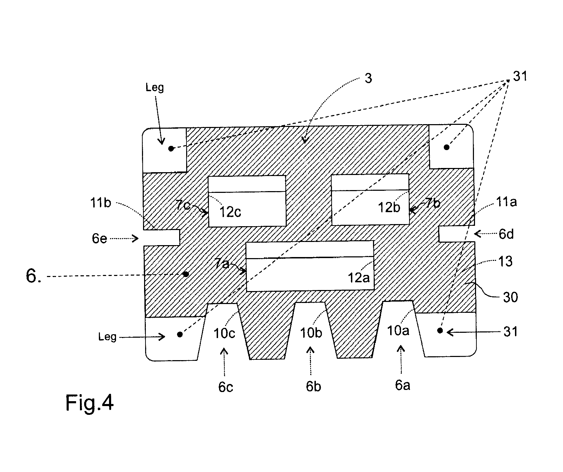

As best seen from Figure 4, each of the external and internal channels also respectively end in an opening in the base 3. Reference numerals 10a-c are used for the base openings for channels 6a-c respectively; 11a-b respectively for the base openings for channels 6d-e respectively; and 12a-c for the base openings for channels 7a-c respectively. All of the channels are dimensioned so as to allow the block 1 to bum by unimpeded propagation of fire along all of the walls defining the channel.

For ease of reference to the block 1, the block will be considered to have a front wall 20, a rear wall 21, a left side wall 22 and a right side wall 23.

The external channels 6a-e are each defined by the internal walls (surfaces) of the block body 2 - in the embodiment they are defined by 3 internal walls. The internal walls have been respectively labelled x-z. One side however of the perimeter of the external channels (the perimeter side which opens onto front wall 20 or side walls 22-23) is open.

The external channels are, as described above, formed by rebates in the external wall or walls of the block body. In the embodiment they are formed as spaced apart rebates, indentations or notches (6a-6e) which run the entire height of the block body. In the front wall 20 of these indentations or notches are formed in a series (6a-6c) while individual indentations or notches are formed respectively in the left and right (6d, 6e) side walls 22, 23.

The internal channels 7a-c are also defined by the internal walls (surfaces) of the block body 2. In the embodiment they have a closed perimeter and are defined by four internal walls. The internal walls have been respectively labelled w-z.

As described in detail above, the internal and external channels all act to propagate fire along surfaces of the block body. In particular the walls x-z or w-z are arranged to combust. Each channel defines an unobstructed conduit (vent) for in the circulation of air for combustion. In particular, each channel is arranged to allow normal circulation of air drawn into the opening at the base of the block body, along the channel and to exhaust through the top of the fire block body. It will be appreciated that for the channels with the open perimeter (the external channels) additional air will be available through the open side of said channels.

It is possible to provide a fire block of the invention by providing only external channels. It is also possible to provide a fire block of the invention by providing only internal channels. However, as shown in the embodiment, it is desirable to provide a combination of external and internal channels. The provision of such channels is suitable to allow the entire block to combust. More particularly, the channels allow the block to combust evenly. Furthermore, the channels allow the block to reach its maximum heat output much more quickly than if the channels were not provided. It is desirable to provide at least four channels, such as at least five, for example at least six or at least seven.

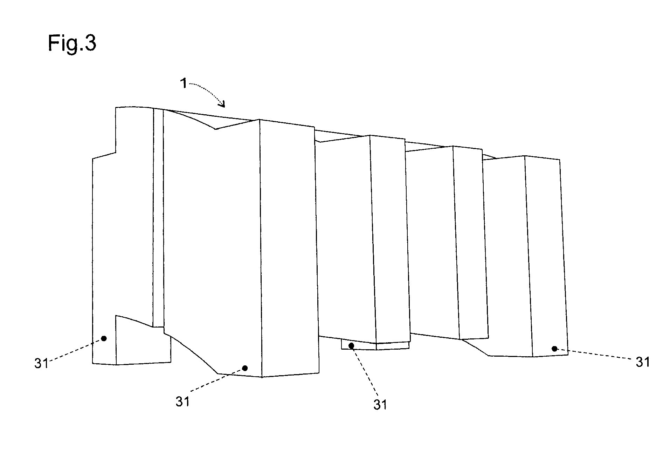

It is desirable in embodiments of the present invention that a raised portion about the openings in the base is provided. In particular, as can be seen from the Figures the underneath surface 13 of the base portion 3 of the body 2 has a raised portion 30. In the embodiment the fire block is provided with four legs 31. Each is at a corner of the fire block body as may be best seen from Figure 3. The raised portion 30 extends across the remainder of the base (that is the remainder of the base when the legs are excluded). The raised portion is of sufficient dimensions to allow unimpeded intake of air into the respective bottom openings 6a-e and 7a-c. It is most important that the raised portion extends about the bottom openings for the closed channels 7a-c. As can be seen from the drawings the raised portion 30 can be provided with a substantially arcuate profile. Desirably the raised portion is tapered for example increasing in height.

Indeed the raised portion 30 fulfils a second function also as it is adapted to mate with the top surface 32 of a second fire block of similar construction as will be described below in relation to later Figures.

The fire block shown in the Figures may be manufactured in any desired manner. For example by pressing a suitable quantity of combustible material in a mould. Techniques for creating a solid block of material from loose matter are well known to the person skilled in the art and will not be described here in detail. Because of the efficiency of burning of the fire block of the invention, difficult-to-burn materials which are otherwise generally not used may actually be incorporated into a fire block of the present invention.

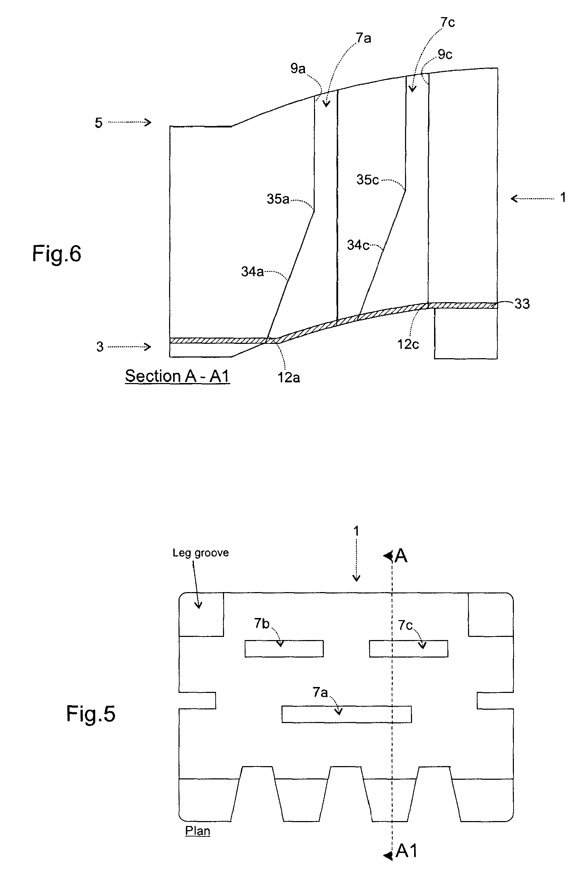

It is desirable to include a fire ignition material within the fire block of the present invention. Figures 4-6 best show fire ignition material incorporated in a fire block of the present invention. In particular, the underneath surface 13, in particular the raised portion 30 is provided with a fire ignition material 33. The fire ignition material is shown in hatched lines in Figure 4 and can be seen in the cross-sectional view of Figure 6. As can be seen from Figure 4 and Figure 6 the fire ignition material is formed as a layer on the base of the fire block 1. This is a desirable arrangement for all embodiments of the invention. It is further desirable that the ignition material propagates ignition of the fire block across substantially the entire base of the fire block.

In particular it is desirable that the ignition material extends proximate to at least certain of the openings in the base of the fire block. In the embodiment only the area occupied by the legs 31 is not provided with the fire ignition material 33. Suitable fire ignition materials include ethanol based gels or pastes, paraffin waxes, kerosene and combinations thereof. The fire ignition material will be substantially evenly distributed across the base of the fire block body. The fire ignition material may be placed on the base of the fire block body or may be impregnated into the base of the fire block body. A layer of the material may be provided within the block body.

It is also desirable that at least certain channels of the fire block body, in particular the internal channels, are provided with a reduced cross-sectional area in a direction from the base of the fire block to the top thereof. As best seen from the underneath view in Figure 4, and the cross sectional view of Figure 6, the internal channels 7a-c are provided with a reduced cross-sectional area in the direction from the base 3 to the top 5. In particular the channels 7a,7c are respectively provided with a side wall 34a,34c which tapers inwardly to form a neck at point 35a, and 35c respectively. It will be appreciated that the restriction can occur in many directions including from front to back or *vice versa*, or left to right or *vice versa* or combinations thereof. Such an arrangement allows the channels to mimic a chimney arrangement which promotes convection currents through the channels - improving the draught (air) available for burning.

This means that fire will propagate up the fire propagation channels in a similar manner to which fire propagates along external surfaces of the fire block. In other words, the fire propagation channels allow fire to spread as if the surfaces that are internal to the channel (x-z or w-z) were actually external surfaces.

Suitably, the fire propagation channels will have a cross-sectional area of at least 3 cm², for example at least 3.5 cm², such as at least 4 cm², generally at least 4.5 cm², desirably at least 5 cm².

It is desirable that at least certain of the channels (desirably at least one of the internal channels) are elongate across (in the X axis direction as illustrated in Figure 1) the fire block body. In particular channels 7a-c are elongate across the fire block body. The block body is elongate (its perimeter is substantially rectangular in shape) and the elongate shape of the channels 7a-c are aligned in the same direction. They are arranged with a transverse axis substantially parallel to the transverse axis of the body. Such an arrangement allows for more flames to be seen when the block is placed in its normal orientation for burning, that is for example when front side 20 is to the front of the fire. It is also to be noted that the channels terminate at different positions along the height (Z axis as shown in Figure 1) of the fire block. For example the height of the top openings 8a-c of external channels 6a-c is less than the height of the top openings 9a-c of the internal channels 7a-c. This may be achieved by having an inclined (for example a curved, such as a convex,) top surface of the block - such as an inclined top surface 32. Having staggered heights for the top openings also allows for more flame to be seen. This may add to the aesthetic effect. It will be appreciated that the raised portion 30 also creates a differential in height for at least certain of the channel openings in the base of the fire block 1. This also can contribute to better circulation of air. This may be achieved by having an inclined (for example a curved, such as a concave,) underneath surface of the block - such as underneath surface 13 of raised portion 30.

A further feature of the fire block of the invention is that the fire block is arranged to be stackable. In particular the top of one fire block is arranged for mating engagement with the base of another. In particular, it will be appreciated that the top surface 32 of the fire block one is arranged to mate with the underneath surface of a second fire block. Short rebates in the form of cut-out corners 40 are provided as the (opposing) top rear corners of the fire block 1. These corners 40 are adapted to mate with the rear legs 31 of a second fire block of the same construction.

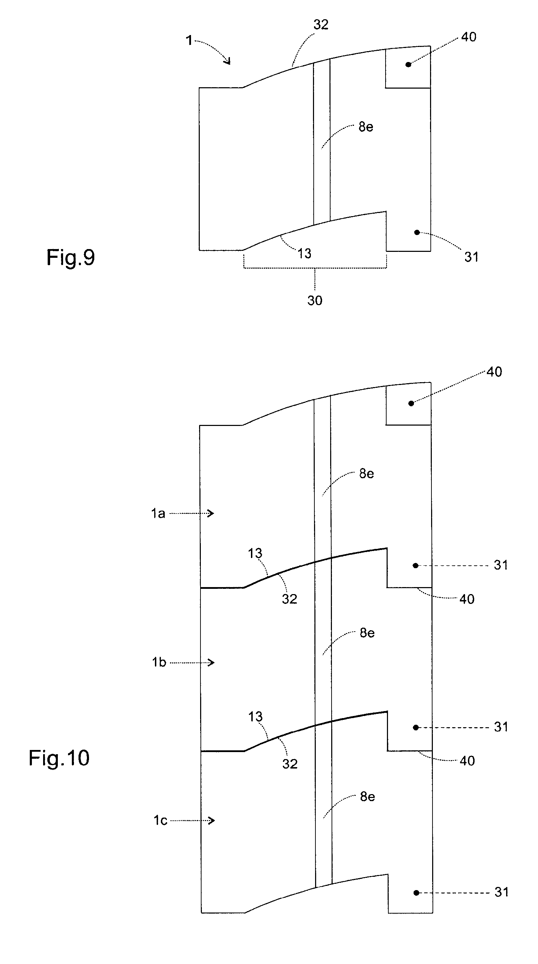

A stacking arrangement is shown in Figure 10. As can be seen in Figure 10, three blocks, 1a, 1b and 1c, have each been stacked one on top of the next. As can be seen from Figure 10, the rear legs 31 of a first block fits into the cut-out corners 40 of a second part. The (concave) raised portion 30 of the base of one fire block mates with the (convex) top surface 32 of the next. This results in a secure stacking arrangement whereby the fire blocks 1a-c positively engage with another. Accordingly, they are secure in this position and will not easily slide off each other.

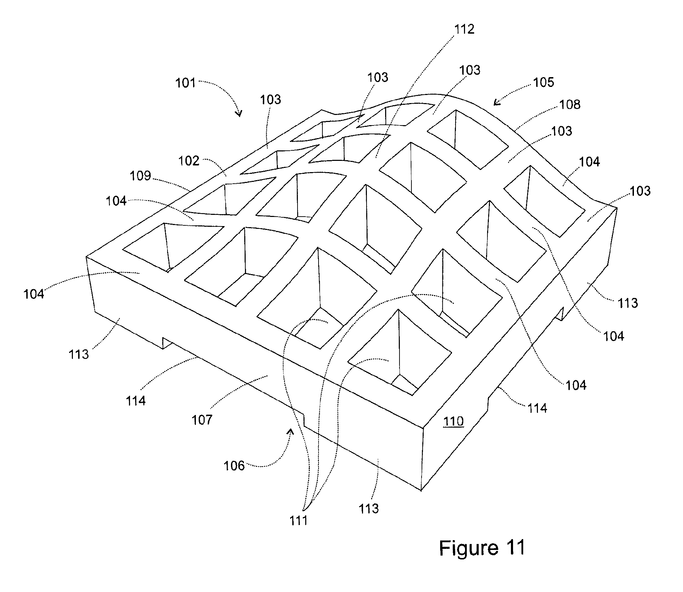

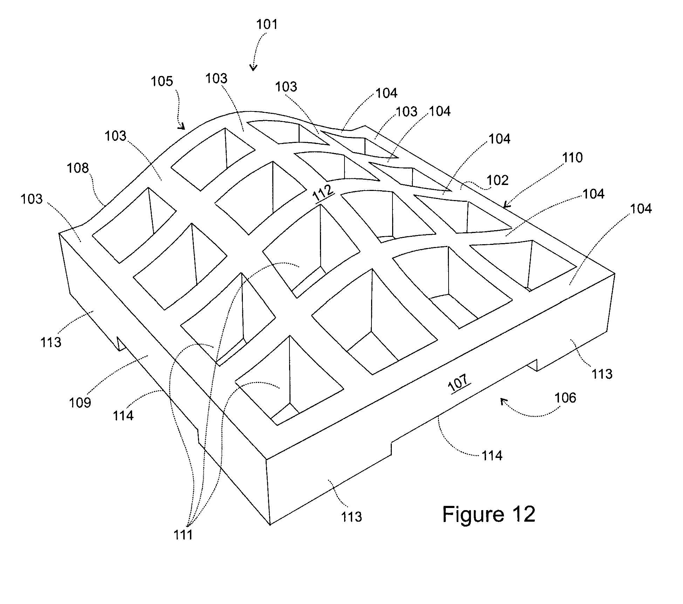

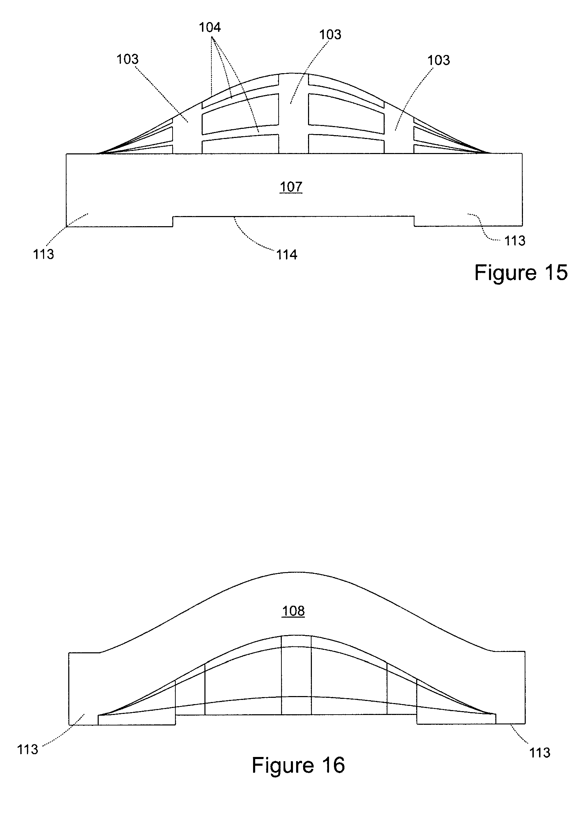

The second aspect of the invention relating to firelighters will now be described with reference to Figures 11- 23.

Figure 11 shows one embodiment of a firelighter 101 of the present invention. The firelighter takes the form of a body 102 of fire ignition material. The fire ignition material can be of any conventional firelighter material.

As can be seen in the body to 102 of fire ignition material takes the form of a web profile with open cells or apertures. The profile can be formed by moulding, extrusion etc. In the embodiment, the profile is achieved by a series of cross members 103 which intersect with a second series of cross members 104. Each of the cross-members is made from material which is suitable for lighting a fire of solid fuels such as is conventionally used in conventional firelighter. A series of apertures 111 form part of the web profile. The apertures extend the entire way through the body 102 (from top to bottom).

The firelighter has an upper surface 105, an underneath surface 106, a front side 107, a rear side 108, a left side 109, and a right side 110. The firelighter of the invention is profiled to be placed on a surface on which a fire is to be lit, for example a grate or the like. A solid fuel to form the fire is placed on the upper surface 105 of the firelighter 101. The web profile, allows large amounts of air to be drawn in through apertures 111 resulting in a unitary firelighter which is lit easily and through which fire propagates quickly. The firelighter of the invention is thus very efficient at lighting a fire. Because it is made of conventional firelighter material it is easily lit.

The firelighter shown in Figure 11 has a rectangular grid or reticulated type pattern. It will be appreciated that the cross members performing the web profile need not run linearly or intersect at right angles. The web profile could take have apertures of any given shape or many combinations of shape.

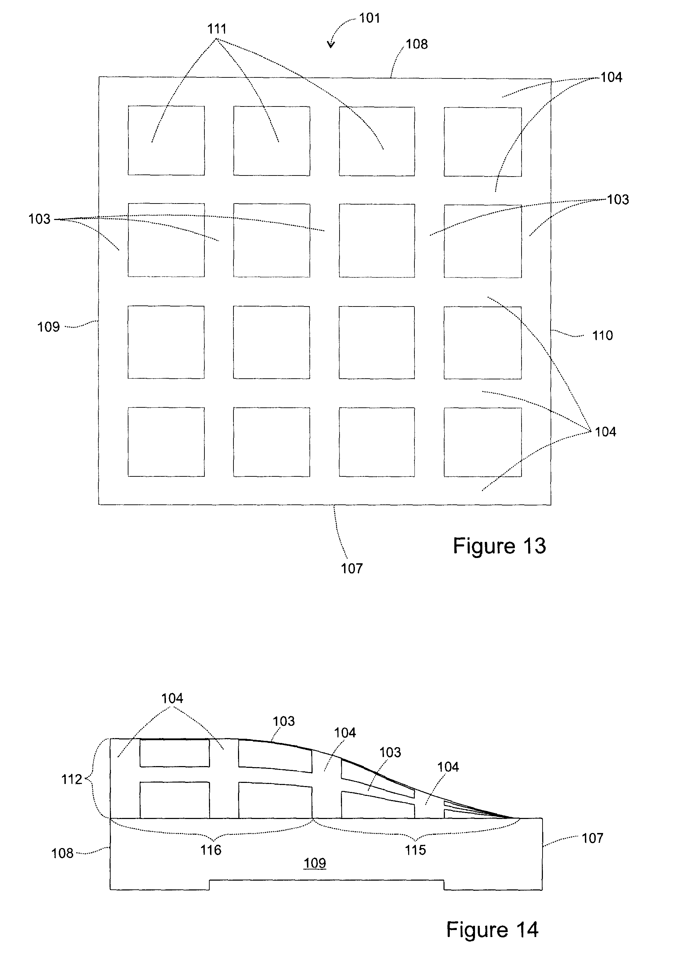

As can be seen from Figures 11-16, the firelighter of the invention has an intermediate portion 112 (between the left and right sides) which is raised. In particular the intermediate portion is raised with respect to three sides of the firelighter (front side 107, left side 109 and right side 110). It will be appreciated that the entire section of the body 102 is raised in the intermediate portion (including the underneath surface 106 is raised in the intermediate portion). In the embodiment the intermediate portion 112 is inclined with respect to the remainder of the firelighter 101. In particular, the intermediate portion has an arched (convex) shape. The arched shape extends to rear side 108 which is also raised with respect to the other sides. It will be appreciated that the firelighter 101 has two inclined portions which meet to form the apex of the arched arrangement. In particular the firelighter 101 is inclined (upwardly) from left side 109 through the intermediate portion where it reaches an apex at the junction with an (opposing) inclined portion running from right side 110 toward the apex. It will be appreciated also that the firelighter 101 has an inclined portion running inwardly from front side 107 toward the apex. As best seen from the side view of Figure 14, the intermediate raised portion thus comprises two distinct raised portions which run contiguously to each other - raised portion 115 and raised portion 116. The portion 105 can be a considered a curved hip portion, in particular a concave hip portion.

The firelighter stands on four legs 113 each at a corner of the firelighter. Between each pair of adjacent legs is provided a recess 114 for increased airflow to the underneath surface 106 of the firelighter 101.

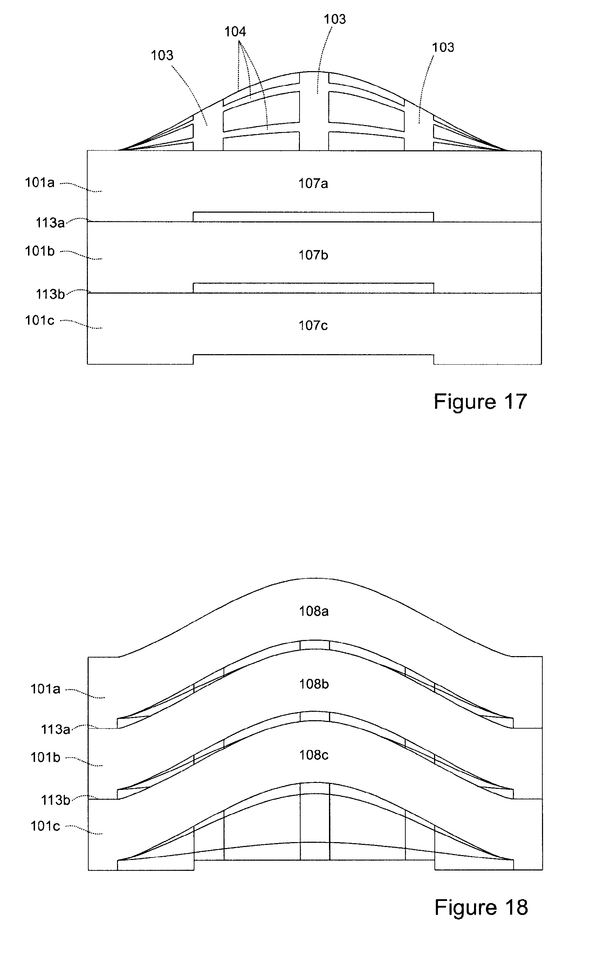

Figures 17 and 18 respectively show front and rear views of a stacked arrangement of a firelighter as described with reference to Figures 11-16. In particular, Figures 17 and 18 show an arrangement of three firelighters 101a-c stacked one on the next. As can be seen there is a mating of the firelighters - one with the next. In particular, the upper surface 105 of any given firelighter mates with the under surface 106 of the next. In the arrangement of Figures 17 and 18 it can be seen that the front sides 107 a-c of the respective firelighters stacked one on top of the other in a nested type arrangement. The legs 113a-b of one firelighter sits on top the next. This allows for a neat stacking/packing arrangement.

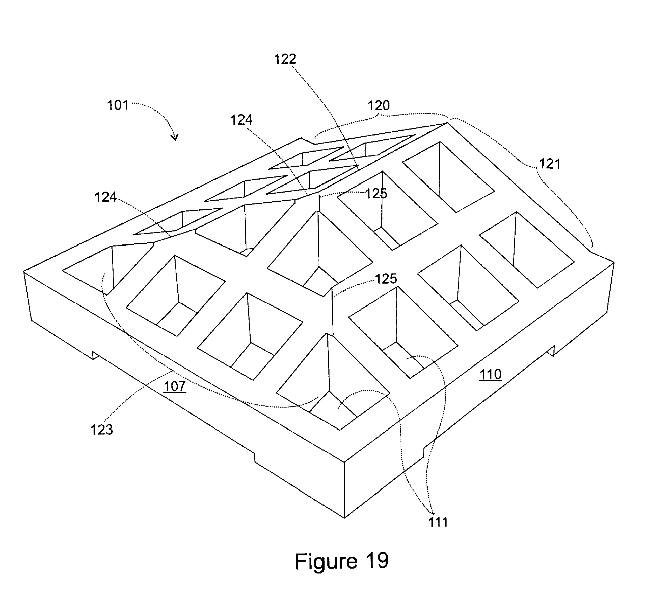

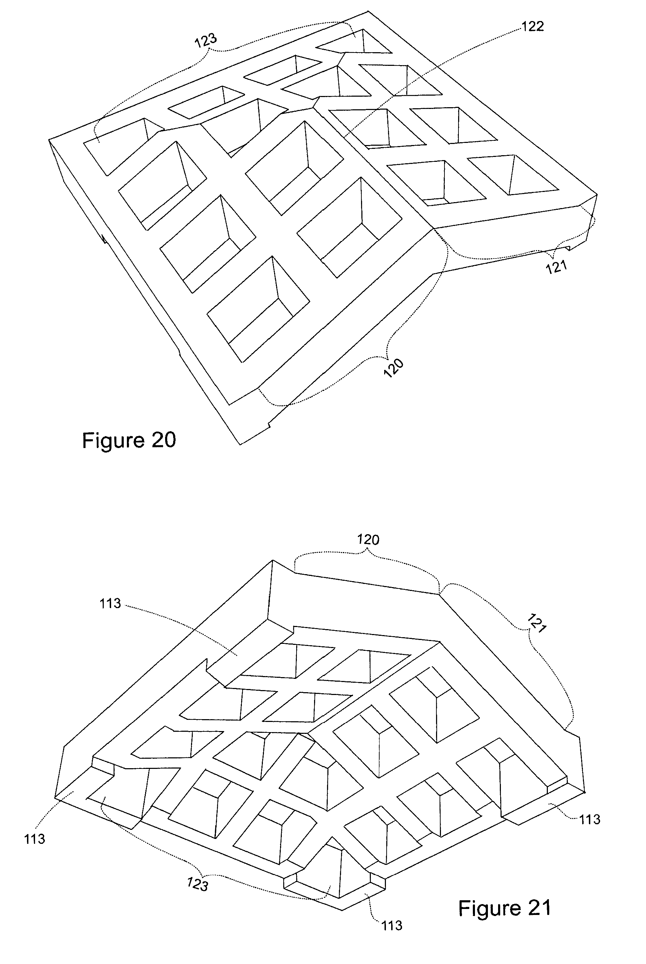

Figures 19-21 show a further embodiment of a firelighter of the present invention having a similar construction to that set out in Figures 11-16. In particular the firelighter 101 has three pitched sections. The first is a left-hand pitched section 120. A second pitched section is a right-hand pitched section 121. The respective pitched sections 120 and 121 are opposed to each other and meet at an angular joint. The sections 120 and 121 can be considered to be in a general v-shape arrangement and meet at an apex 122. A third pitched section 123 forms an end section than runs up to meet the junction of the two opposing sections 120 and 121. The pitched section 123 meets the sections 120 and 121 respectively along apices 124 and 125. The pitched section 123 can be considered a hip section to the profile. Figures 19-21 show a construction of a firelighter of the present invention where the intermediate portion is raised and has a hip profile. As can be seen in particular from Figure 21, the entire profile of the firelighter is raised in the intermediate portion. (That is, the underneath surface is raised also.)

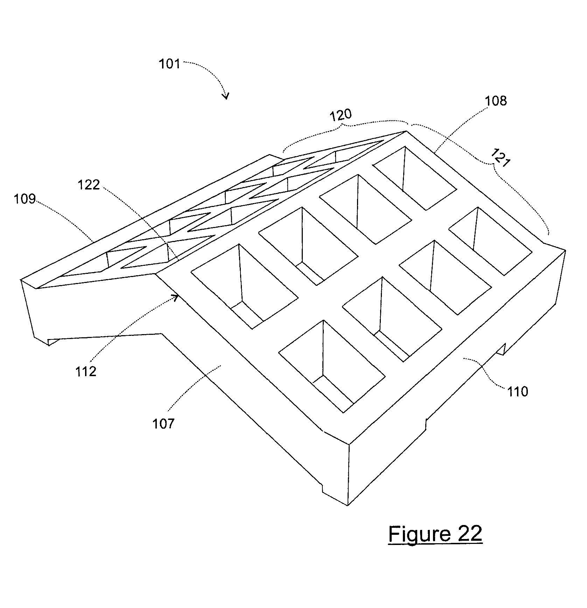

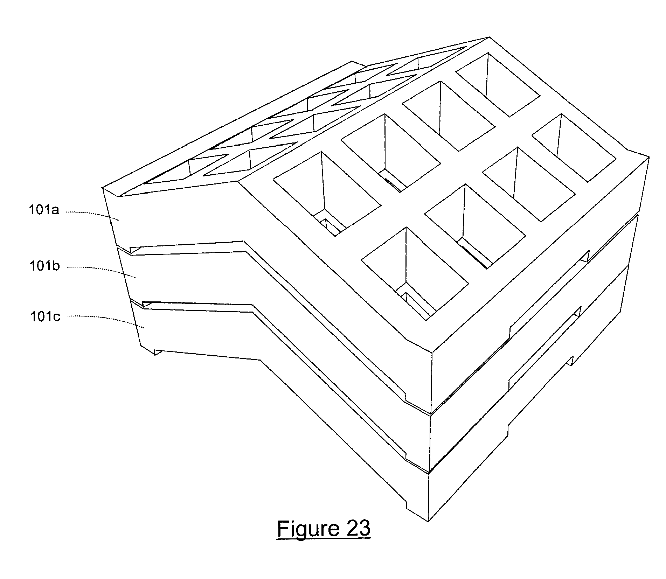

Figure 22 shows a further embodiment of a firelighter of the present invention having a similar construction to that set out in Figures 19-21 that is a pitched type arrangement. In particular, there are again two inclined angular portions 120 and 121 which meet in an apex 122. However, in this embodiment the entire intermediate portion 112 is raised including front side 107 and rear side 108. The inclined portions run the entire length of the firelighter. The construction is analogous to that of Figures 19-21 except that there is no hip section (123) present and the inclined portion extends the entire length of the device. As will be appreciated in this embodiment the intermediate portion is raised with respect to sidewalls 109 and 110. Figure 23 again illustrates how firelighters of the present invention nest together for stacking or packaging purposes. In Figure 23 three firelighters 101a-c are stacked one upon the next in a neat, mated arrangement.

### Experimental Work

### FIREBLOCK

A fire block according to Figure 1 was constructed of sawdust dried to 10% moisture content and was prepared by press moulding. The block had dimensions 240mm by 170mm. The fire block had a firelighter ignition material of firelighter gel adhered therein as shown in the Figures. The ignition material used was an ethanol-based firelighter gel which was provided in a layer having an average thickness of approximately 3mm across the base of the fire block.

The fire block of the invention was placed in a conventional fireplace having a chimney and lit using a cigarette lighter.

The fire block took approx 30 minutes to reach max heat output. It burned for 150 minutes with an average heat output of 9200 BTU/lb (4399 kJ/kg).

### FIRELIGHTER

Tests were conducted in a normal domestic fireplace. Coal was the chosen fuel for the tests. Comparative tests were made using similar conditions using coal which has been lit by the paper/kindling and conventional firelighters. So there are three tests - (i) lighting the coal using paper/kindling; (ii) lighting the coal using paper/kindling using conventional firelighters and (iii) lighting the coal using a firelighter of the invention in particular as shown in Figure 1.

The maximum heat output, and the time taken to reach that heat output, was monitored in each case.

### Paper/kindling

A coal fire was built using paper and (wood) kindling as the ignition source. The fire was constructed with care and from experience. Coals were placed, one at a time, to try to prevent fire collapse under burning conditions. Twenty fires were built in this way. These fires produced good results with a well-constructed fire reaching its maximum output in about an hour on average.

### Conventional Firelighters

The procedure above was repeated utilising 2 conventional (Zip^{™}) domestic firelighters. Results using two or three conventional firelighters were not as good as with paper/kindling. This was attributed to poorer air circulation and slower fire propagation even though careful fire construction was used. Maximum levels of heat output were not achieved for on average up to 90 minutes. The maximal energy output over the duration of the fire was also less with the manufactured firelighters than traditional methods due for the most part to subdued burning and uneven propagation.

### Comment

With both of the traditional methods of fire lighting it was necessary to continuously tend the fires (adding a coal at a time) to maximise fire performance.

### Firelighter of the Invention

A firelighter of the invention as shown in Figure 1 was constructed using papier-mâché impregnated with paraffin to aid ignition. Coal was added correctly by pouring it out onto the lighter in a random manner and in a sufficient quantity not to require further addition for an extended period, in the tests appeared greater than two hours. The firelighter thus formed a web which supported the coal. Because the firelighter has a profile with a raised portion, that profile was imparted to the coal. A number of tests of this kind were carried out and the results were averaged.

Test results demonstrated that the fire produced substantial heat within minutes and matured to its maximum potential well within 30 minutes on average. The fastest time to reach maximum output was 18 minutes and the slowest was 25 minutes. In each test the energy produced by the fire was well in excess of that of previous methods. Furthermore there was no requirement to add additional coal for a lengthy period as the fire retained its heat. Even though the fire was immediately responsive and high performing, producing heat immediately to the room, the amount of coal needed for heating requirements over an extended period of time did not exceed that of the other methods.

One important feature of the firelighters of the invention which emerged during testing is that as the firelighter burned away, it was observed that the fuel retained its raised profile as the coals had fused creating a bridging arrangement which did not collapse even when the firelighter was completely burned away.

### Conclusion

Both the fire block and firelighters of the invention provide substantial advantages over their corresponding conventional equivalents.

The words "comprises/comprising" and the words "having/including" when used herein with reference to the present invention are used to specify the presence of stated features, integers, steps or components but does not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A combustible fire block for providing sustained heat output comprising:
a combustible fire block body formed from combustible material pressed into a mass and having a base, an intermediate portion and a top;
at least one fire propagation pathway formed within the body and with a closed perimeter defined by internal surfaces of the body, and at least one fire propagation pathway defined by internal surfaces of the body which has a perimeter which is open on one side thereof, each of said propagation pathways running along respective vertical axes from respective openings in the base to respective openings in the top and each being defined by internal vertical walls of the body and each being dimensioned so as to allow the block to bum by propagation of fire along the walls defining the pathway, the closed perimeter being closed along the vertical axis and the open perimeter being open on one side along the vertical axis.

2. A fire block according to Claim 1 wherein said propagation pathway which is open on one side thereof takes the form of a rebate in the body.

3. A fire block according to Claim 1 or Claim 2 comprising at least four propagation pathways each in the form of a rebate.

4. A fire block according to any one of the preceding Claims wherein one or more fire propagation pathways are arranged to allow substantially even burning of the fire block body.

5. A fire block according to any preceding claim wherein the base comprises a raised portion about the opening in the base.

6. A fire block according to any preceding claim that is manufactured by moulding.

7. A fire block according to any preceding claim that is manufactured by extrusion.

8. A fire block according to any preceding claim further comprising a fire-ignition material.

9. A fire block according to Claim 8 wherein the body incorporates an ignition material and held on the base and proximate the openings on the base, the ignition material being arranged so as to ignite the fire block along the pathways through the openings on the base.

10. A fire block according to Claim 8 wherein the fire-ignition material is substantially evenly distributed across the base of the fire block body.

11. A fire block according to any preceding claim wherein at least one fire propagation pathway has a reduced cross-sectional area from the base to the top.

12. A fire block according to any preceding claim wherein at least one fire propagation pathway is elongate across the body.

13. A fire block according to Claim 12 wherein at least one fire propagation pathway is arranged with a transverse axis substantially parallel to a transverse axis of the body.

14. A fire block according to any preceding claim wherein the top of the fire block and a base thereof are arranged for a mating engagement so that one fire block can be stacked on another.

15. A fire block according to any preceding claim wherein the fire block body further comprises at least two legs to hold the base in a raised position.

16. A fire block according to Claim 15 wherein the top of the fire block body is rebated to accommodate said legs so that one fire block can be mounted on another.

17. A combustible fire block for providing sustained heat output comprising:
a combustible fire block body formed from combustible material pressed into a mass and having a base, an intermediate portion and a top;
at least two fire propagation pathways formed within the body, said fire propagation pathways each running between an opening in the base and an opening in the top and each being defined by internal walls of the body the pathways being dimensioned so as to allow the block to bum by propagation of fire along the internal walls defining each pathway,
the body incorporating an ignition material proximate the openings and held on the base thereof, the ignition material being arranged so as to ignite the fire block along the pathways through the openings on the base.

18. A fire block according to Claim 17 wherein at least one of said fire propagation pathways has a closed perimeter defined by internal surfaces of the body.

19. A fire block according to Claim 17 or 18 wherein at least one of said propagation pathways has a perimeter which is open on one side thereof.

20. A fire block according to Claim 17 comprising at least one fire propagation pathway with a closed perimeter defined by internal surfaces of the body and at least one propagation pathway has a perimeter which is open on one side thereof.

21. A fire block according to Claim 19 or Claim 20 wherein said propagation pathway which is open on one side thereof takes the form of a rebate in the body.

22. A fire block according to Claim 21 comprising at least four propagation pathways each in the form of a rebate.

23. A fire block according to any one of Claims 17 to 22 wherein one or more fire propagation pathways are arranged to allow substantially even burning of the fire block body.

24. A fire block according to any one of Claims 17 to 23 wherein the base comprises a raised portion about the opening in the base.

25. A fire block according to any one of Claims 17 to 24 that is manufactured by moulding.

26. A fire block according to any one of Claims 17 to 23 that is manufactured by extrusion.

27. A fire block according to any one of Claims 17 to 26 further comprising a fire-ignition material.

28. A fire block according to Claim 27 wherein the fire-ignition material is substantially evenly distributed across the base of the fire block body.

29. A fire block according to one any one of Claims 17 to 28 wherein at least one fire propagation pathway has a reduced cross-sectional area from the base to the top.

30. A fire block according to any one of Claims 17 to 29 wherein at least one fire propagation pathway is elongate across the body.

31. A fire block according to Claim 30 wherein at least one fire propagation pathway is arranged with a transverse axis substantially parallel to a transverse axis of the body.

32. A fire block according to any one of Claims 17 to 31 wherein the top of the fire block and a base thereof are arranged for mating engagement so that one fire block can be stacked on another.

33. A fire block according to any one of Claims 17 to 32 wherein the fire block body further comprises at least two legs to hold the base in a raised position.

34. A fire block according to Claim 33 wherein the top of the fire block body is rebated to accommodate said legs so that one fire block can be mounted on another.

35. A one-piece combustible fire block for providing sustained heat output comprising:
a combustible fire block body formed from combustible material pressed into a mass and having a base, an intermediate portion and a top;
at least one fire propagation pathway defined by internal surfaces of the body which has a perimeter which is open on one side thereof, said propagation pathways running along a vertical axis from an opening in the base to an opening in the top and being defined by internal vertical walls of the body the pathway being dimensioned so as to allow the block to bum by propagation of fire along the walls defining the pathway, the open perimeter being open on one side along the axis,
the body incorporating a raised portion in the base thereof, the raised portion having the opening in the base defined therein.

36. A fire block according to Claim 35 wherein said block further comprises a fire propagation pathway which has a closed perimeter along a vertical axis and is defined by internal surfaces of the body.

37. A fire block according to Claim 35 comprising at least one fire propagation pathway with a closed perimeter defined by internal surfaces of the body and at least one propagation pathway which has a perimeter that is open on one side thereof.

38. A fire block according to Claim 35 wherein said propagation pathway which is open on one side thereof takes the form of a rebate in the body.

39. A fire block according to Claim 38 comprising at least four propagation pathways each in the form of a rebate.

40. A fire block according to any one of Claims 35 to 39 wherein one or more fire propagation pathways are arranged to allow substantially even burning of the fire block body.

41. A fire block according to any one of Claims 35 to 40 that is manufactured by moulding.

42. A fire block according to any one of Claims 35 to 40 that is manufactured by extrusion.

43. A fire block according to any one of Claims 35 to 42 further comprising a fire-ignition material.

44. A fire block according to Claim 43 wherein the fire-ignition material is substantially evenly distributed across the base of the fire block body.

45. A fire block according to any one of Claims 35 to 44 wherein at least one fire propagation pathway has a reduced cross-sectional area from the base to the top.

46. A fire block according to any one of Claims 35 to 45 wherein at least one fire propagation pathway is elongate across the body.

47. A fire block according to Claim 46 wherein at least one fire propagation pathway is arranged with a transverse axis substantially parallel to a transverse axis of the body.

48. A fire block according to any one of Claims 35 to 47 wherein the top of the fire block and a base thereof are arranged for mating engagement so that one fire block can be stacked on another.

49. A fire block according to any one of Claims 35 to 48 wherein the fire block body further comprises at least two legs to hold the base in a raised position.

50. A fire block according to Claim 49 wherein the top of the fire block body is rebated to accommodate said legs so that one fire block can be mounted on another.

51. A combustible fire block for providing sustained heat output comprising:
a combustible fire block body formed from combustible material pressed into a mass and having a base, an intermediate portion and a top;
at least one fire propagation pathway formed within the body, said fire propagation pathway running vertically between an opening in the base and an opening in the top and being defined by internal walls of the body the pathway being dimensioned so as to allow the block to bum by propagation of fire along the internal walls defining the pathway,
said at least one fire propagation pathway having a reduced cross-sectional area from the base to the top so that the opening in the base has a greater cross-sectional area than the opening in the top.

52. A fire block according to Claim 51 wherein said fire propagation pathway has a closed perimeter defined by internal surfaces of the body.

53. A fire block according to Claim 51 further comprising a propagation pathway that has a perimeter which is open on one side thereof.

54. A fire block according to Claim 51 comprising at least one fire propagation pathway with a closed perimeter defined by internal surfaces of the body and at least one propagation pathway has a perimeter which is open on one side thereof.

55. A fire block according to Claim 53 wherein said propagation pathway which is open on one side thereof takes the form of a rebate in the body.

56. A fire block according to Claim 55 comprising at least four propagation pathways each in the form of a rebate.

57. A fire block according to any one of Claims 51 to 56 wherein one or more fire propagation pathways are arranged to allow substantially even burning of the fire block body.

58. A fire block according to any one of Claims 51 to 57 wherein the base comprises a raised portion about the opening in the base.

59. A fire block according to any one of Claims 51 to 58 that is manufactured by moulding.

60. A fire block according to any one of Claims 51 to 59 that is manufactured by extrusion.

61. A fire block according to any one of Claims 51 to 60 further comprising a fire-ignition material.

62. A fire block according to Claim 61 wherein the fire-ignition material is substantially evenly distributed across the base of the fire block body.

63. A fire block according to any preceding claim wherein a plurality of fire propagation pathways are provided each having a closed perimeter and each having a reduced cross-sectional area from the base to the top.

64. A fire block according to any one of Claims 51 to 63 wherein at least one fire propagation pathway is elongate across the body.

65. A fire block according to Claim 64 wherein at least one fire propagation pathway is arranged with a transverse axis substantially parallel to a transverse axis of the body.

66. A fire block according to any one of Claims 51 to 65 wherein the top of the fire block and a base thereof are arranged for mating engagement so that one fire block can be stacked on another.

67. A fire block according to any one of Claims 51 to 66 wherein the fire block body further comprises at least two legs to hold the base in a raised position.

68. A fire block according to Claim 67 wherein the top of the fire block body is rebated to accommodate said legs so that one fire block can be mounted on another.

69. A firelighter comprising a body of fire ignition material in the form of a webbed profile onto which a fuel to be ignited for combustion can be placed.

70. A firelighter according to Claim 69 wherein the web is in the form of a grid arrangement.

71. A firelighter according to Claim 69 or Claim 70 wherein the profile has a top a bottom and sides and an intermediate portion between the sides, the intermediate portion of the profile being raised with respect to at least one side portion.

72. A firelighter according to Claim 71 wherein the intermediate portion has two or more distinct raised portions.

73. A firelighter according to any one of Claims 70 to 72 wherein the profile includes at least one inclined portion.

74. A firelighter according to any one of Claims 70 to 73 which includes at least two inclined portions.

75. A firelighter according to Claim 74 wherein the inclined portions which meet in an apex.

76. A firelighter according to any one of Claims 70 to 75 including a hip portion formed by the junction of an inclined side portion and an inclined end portion.

77. A firelighter according to any one of Claims 70 to 76 wherein at least one inclined portion has a curved shape.

78. A firelighter according to Claim 77 wherein the curved shape is a convex shape.

79. A firelighter according to Claim 77 or Claim 78 wherein the inclined end portion has a curved shape for example a concave shape.

80. A firelighter according to any one of Claims 70 to 79 which is arranged to matingly engage with another for stacking thereof.

81. A firelighter according to any one of Claims 70 to 80 which has length by width dimensions of at least 130 mm x 130 mm.

82. A fire block according to any one of Claims 1 to 69 wherein the body is impregnated with an oil.

83. A firelighter according to any one of Claims 70 to 81 wherein the body is impregnated with an oil.
